# FASCICULE DE BREVET EUROPEEN

(11) **EP 1 952 733 B1**
(45) Date de publication et mention de la délivrance du brevet: **19.08.2009**
(21) Numéro de dépôt: 08290116.6
(22) Date de dépôt: 25.01.2008
(51) Int. Cl.: A47J 27/21

(54) **Appareil électrique de chauffage de liquide ayant un couvercle pourvu d'une ouverture de remplissage**
Elektrisches Gerät zum Erhitzen von Flüssigkeiten mit einem Deckel mit einer Einfüllöffnung
Electrical liquid-heating appliance having a lid with a filling opening

(30) Priorité: 31.01.2007 FR 0700668
(43) Date de publication de la demande: 06.08.2008
(73) Titulaire: SEB S.A., 69130 Ecully (FR)
(72) Inventeur: Lancon, Franck, 14790 Mouen (FR)
(74) Mandataire: Kiehl, Hubert

(56) Documents cités:
- EP-A1- 1 169 954
- WO-A-01/32063
- WO-A-20/05107539
- DE-B3-6102004 014 64

## Description

La présente invention se rapporte à un appareil électrique de chauffage de liquide, tel que par exemple une bouilloire électrique. Plus particulièrement, l'invention concerne un appareil de ce type comprenant un boîtier définissant une enceinte destinée à contenir un liquide et munie d'une ouverture supérieure, et un couvercle fermant ladite ouverture supérieure de l'enceinte et comprenant une paroi supérieure munie d'au moins une ouverture de remplissage communiquant avec l'enceinte.

Les appareils de chauffage électrique de liquide, et notamment les bouilloires, comportent généralement une large ouverture supérieure qui permet non seulement de remplir l'enceinte, mais aussi de nettoyer efficacement les parois de celle-ci. Cette ouverture est munie d'un couvercle pour éviter les projections de liquide lors de la manipulation du boîtier, mais aussi pour limiter les déperditions de chaleur quand le liquide est chauffé dans l'enceinte. La présence du couvercle s'avère également utile pour déclencher rapidement un thermostat sensible aux vapeurs produites par le liquide lorsqu'il arrive à ébullition. En effet, même si l'enceinte est rarement complètement obturée du fait de la présence d'un bec verseur, les déperditions de chaleur et de vapeur sont fortement limitées par la présence d'un couvercle sur l'ouverture supérieure.

Toutefois, certains utilisateurs trouvent fastidieux de manipuler le couvercle à chaque fois qu'ils veulent remplir l'enceinte à l'aide d'un robinet d'eau ou d'une bouteille de liquide. On a donc proposé dans l'art antérieur des appareils électriques de chauffage de liquide dont le couvercle comporte une ou plusieurs ouvertures de remplissage établissant une communication entre la paroi supérieure du couvercle et l'enceinte.

Néanmoins, ceux-ci n'ont pas donné entière satisfaction. En effet, si la ou les ouvertures de remplissage sont trop petites, il devient difficile de canaliser le jet d'eau d'un robinet, qui peut être plus ou moins violent et de section plus ou moins importante, à travers l'ouverture sans produire des éclaboussures. D'autre part, si l'ouverture de remplissage présente une section importante, il s'avère alors nécessaire de prévoir un dispositif d'obturation automatique de cette ouverture, comme par exemple un volet pivotant tel que décrit dans le document EP-A-1169954. Or, la présence d'un tel dispositif d'obturation automatique peut entraîner des éclaboussures au début du remplissage étant donné qu'il ne peut pas prendre instantanément une position ouverte, voire ne plus s'ouvrir en cas de grippage.

La présente invention a donc pour but de faciliter le remplissage de l'enceinte à travers au moins une ouverture du couvercle en limitant le risque d'éclaboussures, et tout en limitant par la suite les déperditions de chaleur, vapeur ou liquide qui peuvent survenir à travers ce couvercle.

A cet effet, la présente invention a pour objet un appareil du type précité, caractérisé en ce que la paroi supérieure du couvercle présente au moins un dôme s'étendant depuis un sommet vers une base annulaire, et un pourtour périphérique surélevé par rapport à la base du dôme, ladite au moins une ouverture de remplissage étant agencée entre la base du dôme et le pourtour périphérique.

Il s'avère que le dôme, de par sa forme plus ou moins arrondie, permet avantageusement de canaliser les filets d'eau relativement turbulents provenant d'un robinet, vers la ou les ouvertures de remplissage. De plus, le dôme fournit une surface suffisamment étendue pour recueillir facilement le flot d'un robinet, même si celui-ci comporte un diffuseur élargissant le diamètre du jet. Le liquide reçu et canalisé par le dôme peut alors s'écouler aisément par la ou les ouvertures de remplissage de section totale bien inférieure à la surface collectrice de liquide du couvercle. Ainsi, le risque d'éclaboussures pendant le remplissage est notablement réduit, et les déperditions de chaleur et de vapeur pouvant par la suite survenir à travers le couvercle sont limitées.

Dans des modes de réalisation préférés de l'invention, on peut avoir recours, en outre, à l'une et/ou à l'autre des dispositions suivantes :
- l'ouverture de remplissage est une fente annulaire continue entourant la base du dôme ; grâce à cette disposition, les écoulements de liquide sont assurés de rencontrer l'ouverture de remplissage quelle que soit leur direction radiale par rapport au dôme ;
- l'ouverture de remplissage est délimitée au moins en partie par un bord inférieur formé par la base du dôme, et par un bord supérieur formé par le pourtour périphérique et situé à une hauteur supérieure par rapport audit bord inférieur ; grâce à cette disposition, l'ouverture de remplissage s'étend selon une direction sensiblement perpendiculaire à l'écoulement, ce qui permet d'optimiser le débit maximal du liquide versé sur le dôme qui traverse cette ouverture ;
- le sommet du dôme est centré par rapport à la paroi supérieure du couvercle et présente une symétrie de révolution autour d'un axe central vertical, ledit sommet présentant de préférence une forme hémisphérique ; ainsi, on obtient un écoulement sensiblement identique quelle que soit l'orientation angulaire d'un éventuel décalage du centre du couvercle par rapport au jet d'eau d'un robinet ;
- la base du dôme s'étend radialement vers l'extérieur dans une direction sensiblement horizontale, ce qui permet de diffuser l'écoulement de liquide dans un plus large espace ;
- le couvercle comprend en outre une paroi inférieure munie d'au moins un orifice de sortie, et délimitant avec la paroi supérieure un espace interne dans lequel le liquide provenant de l'ouverture de remplissage peut s'écouler dans l'enceinte à travers ledit orifice de sortie ; cette structure à double paroi du couvercle permet de réduire les déperditions de chaleur, de vapeur, voire de liquide grâce à une communication moins directe entre les parois supérieure et inférieure du couvercle ;
- l'espace interne du couvercle comporte un élément filtrant s'étendant horizontalement et en communication directe avec l'ouverture de remplissage, ledit élément filtrant présentant une section de passage nettement supérieure à la section de ladite ouverture de remplissage ; un élément filtrant ainsi agencé limite les risques de chute de corps étrangers dans l'enceinte, sans toutefois diminuer le débit à travers l'ouverture de remplissage grâce à sa position en aval et sa surface importante ;
- le boîtier comporte un bec verseur en communication avec l'enceinte, et l'orifice de sortie du couvercle est situé de manière sensiblement opposée au bec verseur ; ceci permet d'éviter un passage du liquide à travers le couvercle lors du versage ;
- l'orifice de sortie est formé par des louvres faiblement inclinées par rapport à l'horizontal ; il a été constaté qu'une telle réalisation permettait de limiter les remontées de vapeur dans le couvercle ;
- la paroi supérieure du couvercle comprend au moins deux pièces, à savoir une première pièce formant le pourtour périphérique et comprenant un évidement, et une deuxième pièce comprenant le dôme engagé dans ledit évidement et pourvu de bras radiaux reliés à une entretoise montée en appui contre la face intérieure de la première pièce.

D'autres caractéristiques et avantages ressortiront de la description qui va suivre, donnée à titre d'exemple non limitatif, en référence aux figures dans lesquelles :
- la figure 1 est une vue en perspective d'une bouilloire électrique comportant un couvercle selon l'invention ;
- la figure 2 est une vue en coupe simplifiée selon la ligne II-II du couvercle et de la partie supérieure de la bouilloire représentée à la figure 1 ;
- la figure 3 est une vue éclatée du couvercle représenté à la figure 1.

Sur les différentes figures, on a conservé les mêmes références pour désigner des éléments identiques ou similaires.

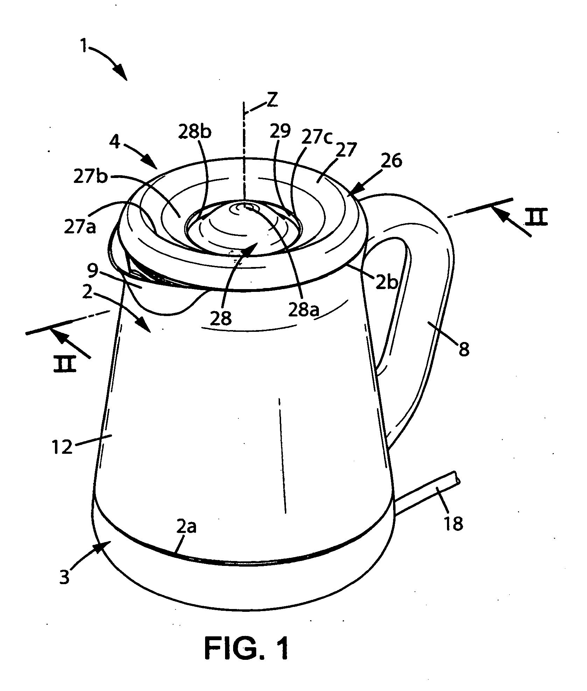

A la figure 1, il est représenté une bouilloire 1 comprenant un boîtier 2, une base 3 et un couvercle 4.

Le boîtier 2 présente une forme globalement tronconique s'étendant verticalement selon un axe central Z depuis une extrémité inférieure 2a jusqu'à un sommet 2b. Le boîtier 2 comporte également une poignée 8 et un bec verseur 9 agencé à proximité du sommet 2b de manière diamètralement opposée à la poignée 8.

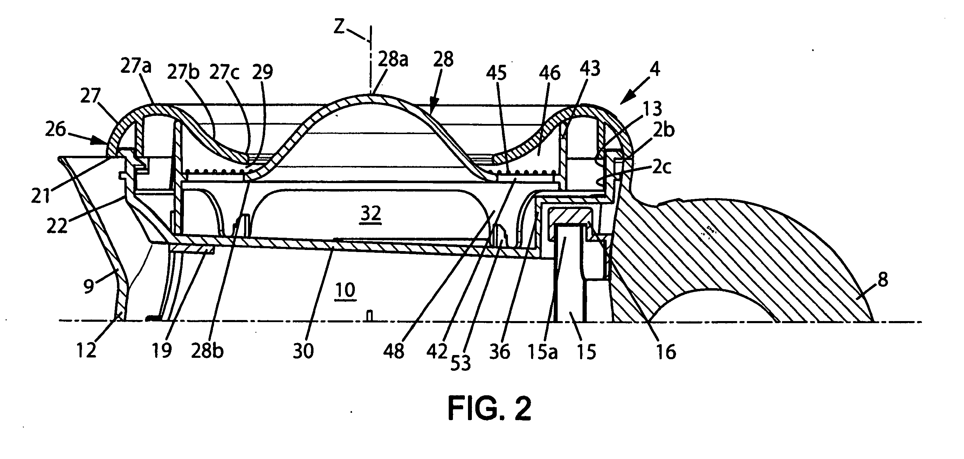

Le boîtier 2 définit avec sa paroi latérale 12 et un fond, non visible sur les figures, une enceinte 10 (figure 2). Comme cela est visible à la figure 2, le pourtour intérieur 2c du boîtier 2 à proximité de son sommet 2b définit une ouverture supérieure 13. Cette ouverture 13 est centrée sur l'axe Z et de diamètre approximativement égal au diamètre du sommet 2b du boîtier. Il s'agit donc d'une large ouverture qui permet, en l'absence du couvercle 4, de remplir aisément l'enceinte 10, mais aussi de nettoyer l'intérieur de l'enceinte 10 et notamment le fond de celle-ci.

En effet, s'agissant d'une bouilloire, le fond de l'enceinte 10 est équipée d'une plaque métallique associée avec une résistance électrique chauffante qui est située entre l'extrémité inférieure 2a du boîtier et cette plaque. Après plusieurs utilisations et selon la qualité de l'eau utilisée, un dépôt de calcaire peut se former sur cette plaque chauffante. Il est donc avantageux que l'ouverture supérieure soit large pour faciliter l'élimination des traces de calcaire à l'aide d'une éponge abrasive.

Le boîtier 2 de la bouilloire pourrait prendre des formes différentes, plus cylindriques ou plus rondes. De même, le bec verseur 9 pourrait prendre une forme plus ou moins prononcée, par exemple sous forme d'un conduit s'étendant à partir de la paroi latérale 12 de l'enceinte. Il est également envisageable dans certains modes de réalisation de prévoir un versement du liquide à travers un dispositif obturateur agencé dans le couvercle lui-même ou tout autre partie du boîtier 2.

Comme on peut le voir à la figure 2, l'enceinte 10 comporte un tube 15 formant un conduit de prise de vapeur s'étendant depuis une extrémité supérieure 15a abritée et maintenue par un capuchon 16, jusqu'à une extrémité inférieure s'étendant au-delà du fond de l'enceinte dans l'espace étanche contenant la résistance électrique chauffante. A proximité de l'extrémité supérieure 15a, est ménagée une encoche, ou une chicane dans le capuchon 16, qui permet le passage de la vapeur générée par l'ébullition de l'eau vers l'extrémité inférieure du conduit 15. Un thermostat situé à proximité de ce conduit permet alors d'arrêter le chauffage lorsque le liquide arrive à ébullition.

Bien entendu, d'autres modes de réalisation du conduit de vapeur 15 sont possibles, notamment à l'intérieur de la poignée 8. Il est aussi possible de placer le thermostat à proximité du sommet de l'enceinte 10, mais en prévoyant un câblage plus long.

La base 3 se présente ici sous forme d'un disque destiné à reposer sur un plan de travail et portant un cordon d'alimentation 18. La base 3 comporte, de manière bien connue, au centre de sa face supérieure, un connecteur électrique de symétrie de révolution qui permet d'alimenter les éléments situés dans l'espace étanche à l'extrémité inférieure 2a du boîtier 2, tout en autorisant une rotation à 360° de celui-ci par rapport à la base 3. Néanmoins, il pourrait s'agir d'un autre type d'appareil électrique de chauffage de liquide, et notamment un appareil pour lequel l'enceinte destinée à contenir de l'eau ou tout autre liquide alimentaire, ne comporterait pas d'élément chauffant. En effet, le liquide ou la boisson pourrait subir d'autres traitements, comme par exemple une opération d'infusion, d'émulsion ou autre, en dehors de l'enceinte.

Le couvercle 4 est monté ici de manière amovible dans l'ouverture supérieure 13 du boîtier 2. Plus précisément, il est engagé avec le pourtour intérieur 2c du boîtier. L'engagement du couvercle 4 est limité par une aile 19 s'étendant dans l'enceinte 10 au niveau du bec verseur 9, ainsi que par un épaulement annulaire extérieur 21 venant en appui contre le sommet 2b du boîtier. L'engagement du couvercle 4 sur le boîtier évite un écoulement abondant du liquide si la bouilloire est fortement inclinée.

Un système de verrouillage du couvercle 4 avec le boîtier 2 est également prévu. Ce système de verrouillage, non visible sur les figures, est par exemple un système à baïonnette comprenant des ergots saillant sur le pourtour intérieur 2c de l'ouverture 13 et des guides en « L » formés dans une paroi latérale 22 du couvercle.

Le couvercle 4 présente une paroi supérieure 26 qui constitue sa face visible lorsque l'on se place au-dessus de la bouilloire 1.

La paroi supérieure 26 du couvercle 4 comporte un pourtour périphérique 27 se présentant, ici, sous forme d'un bourrelet de section verticale arrondie avec un sommet circulaire 27a et une jupe 27b s'étendant vers l'axe central Z jusqu'à un bord intérieur 27c circulaire. Néanmoins, le pourtour périphérique 27 pourrait présenter une section sensiblement différente, par exemple avec des décrochements brusques ou sous forme d'une surface tronconique inclinée vers l'axe central Z, mais de préférence avec une zone annulaire continue, comme le sommet 27a, située à une hauteur plus élevée que son bord intérieur 27c.

La paroi supérieure 26 comporte de plus un dôme 28 s'étendant depuis un sommet 28a jusqu'à une base annulaire 28b. Le dôme 28 présente une forme arrondie avec un sommet 28a quasi hémisphérique prolongé jusqu'à sa base 28b par une jupe évasée. Cette forme arrondie de symétrie de révolution autour de l'axe central Z permet de recueillir un jet d'eau et de guider son écoulement jusqu'à la base 28b sans éclaboussure ou renvoi des écoulements à distance du dôme, même si le jet présente une certaine force. Néanmoins, il est tout à fait possible d'obtenir une canalisation de l'eau recueillie avec un dôme présentant une forme plus proéminente, par exemple en ogive, ou avec une forme ne présentant pas une symétrie de révolution, mais par exemple des reliefs s'étendant selon des méridiennes. Il est aussi possible de prévoir plusieurs dômes.

La base 28b du dôme 28 est agencée à distance du bord intérieur 27c du pourtour périphérique 27, de sorte qu'une fente annulaire continue 29 est définie entre ces deux pièces placées concentriquement. La fente 29 constitue une ouverture permettant le remplissage de l'enceinte 10 en versant l'eau directement sur le dôme 28 du couvercle 4.

La fente 29 formant l'ouverture de remplissage est ici annulaire, de sorte qu'un jet d'eau versé sur le dôme 28 est toujours dirigé vers celle-ci quelle que soit la position angulaire du décalage qu'il peut exister entre le jet et le sommet 28a du dôme. Néanmoins, il est parfaitement possible de prévoir une jonction localisée, voire plusieurs jonctions, entre le dôme 28 et le pourtour périphérique 27, notamment si ces deux éléments sont réalisés en une seule pièce. Dans ce cas, il pourrait être avantageux de prévoir des reliefs sur le dôme 28 pour éviter que des écoulements aillent en direction de ces jonctions et remontent au-delà du sommet 27a du pourtour périphérique 27, mais au contraire pour canaliser les écoulements vers les ouvertures de remplissage.

On notera que dans le mode de réalisation représenté, la base annulaire 28b du dôme 28 est située sous le bord intérieur 27c du pourtour périphérique 27 et présente une orientation sensiblement horizontale. La fente de remplissage 29 constitue donc une ouverture sous la forme d'un cylindre de faible hauteur coaxial à l'axe central Z, qui est traversée par des écoulements de direction radiale extérieure et perpendiculaire à la surface de cette ouverture. Ceci favorise le débit maximal du liquide pouvant traverser la fente de remplissage 29 tout en évitant que du liquide ne passe au-dessus de cette fente sous l'effet de sa vitesse, et tout en limitant les déperditions grâce à sa surface réduite. Néanmoins, il serait possible de prévoir une ou plusieurs ouvertures de remplissage réalisées sous d'autres formes, par exemple de simples trous à la base du dôme, et définies en fonction du débit maximal de liquide que l'on veut recueillir et de la surface acceptable de ces ouvertures.

On notera également que du fait de la correspondance entre la base 28b du dôme 28 et le bord intérieur 27c du bord périphérique 27, la fente de remplissage 29 est peu visible et les possibilités de chute d'un corps étranger à travers celle-ci sont limitées. Dans le mode de réalisation, cette fente 29 est circulaire mais il serait parfaitement envisageable d'adopter une forme ovalisée ou polygonale, notamment selon la forme de la section du boîtier 2, tout en gardant une certaine symétrie autour de l'axe Z. La base 28b du dôme pourrait être prolongée sous la jupe 27b du bord périphérique.

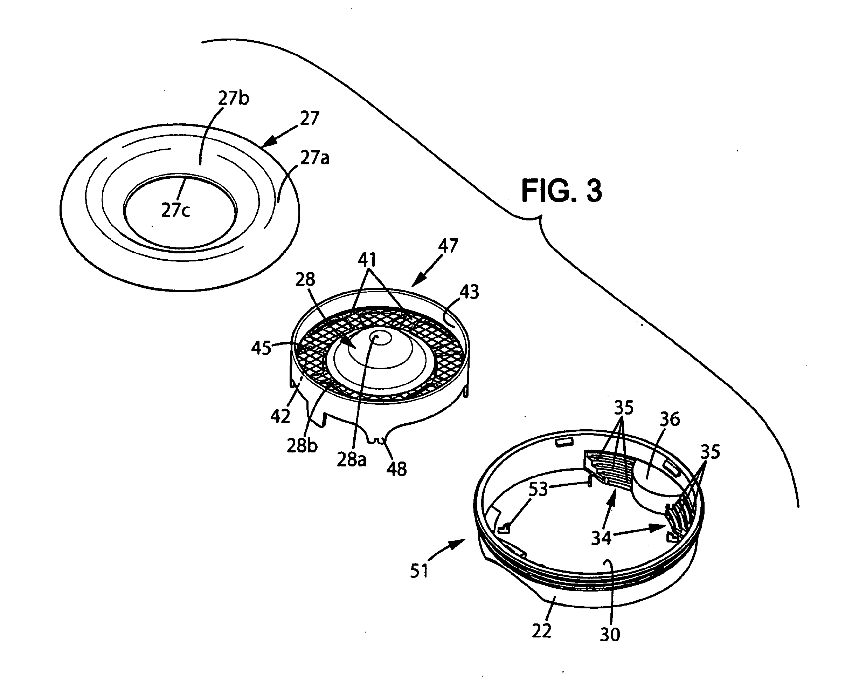

Comme on peut le voir à la figure 2, le couvercle 4 comprend en outre une paroi inférieure 30. Cette paroi inférieure 30 délimite avec les parois latérale 22 et supérieure 26 du couvercle un espace interne 32 dans lequel est recueilli le liquide s'écoulant par la fente 19 formant l'ouverture de remplissage. La paroi inférieure 30 du couvercle 4 comporte des orifices de sortie 34 visibles sur la figure 3, pour permettre au liquide recueilli dans l'espace interne 32 de s'écouler dans l'enceinte 10.

Chaque orifice de sortie 34 est agencé de manière opposée par rapport au bec verseur 9 lorsque le couvercle 4 est correctement positionné sur le boîtier 2. Ainsi, les risques de remontée de liquide à travers un orifice de sortie 34 vers l'espace intérieur 32 du couvercle 4 pendant une opération de versage sont quasi nuls. Par ailleurs, la paroi inférieure 30 du couvercle 4 est inclinée vers les orifices de sortie 34 pour éviter toute accumulation de liquide dans l'espace 32.

Les orifices de sortie 34 pourraient se présenter chacun sous forme d'une simple fenêtre ménagée dans la paroi inférieure 30, mais il est avantageux de réaliser ceux-ci sous forme de louvres 35, c'est-à-dire un ensemble de lamelles orientées parallèlement les unes aux autres et définissant entre elles des fentes à travers lesquelles un fluide peut s'écouler de manière canalisée. En effet, en orientant les louvres 35 quasiment à l'horizontal, on a constaté que les remontées de vapeur dans l'espace intérieur 32 du couvercle 4 étaient réduites. Par conséquent, les déperditions de chaleur par la fente de remplissage 29 sont encore plus limitées et l'accumulation de vapeur dans la partie supérieure de l'enceinte 10 permet au tube 15 de remplir pleinement son rôle de conduit de vapeur vers le thermostat. Les louvres 35 peuvent être inclinées par rapport à l'horizontal, par exemple pour diriger l'écoulement de fluide à l'écart de l'entrée d'un conduit de vapeur. Mais pour avoir une influence sensible sur les remontées de vapeur, il est préférable que les louvres 35 soient faiblement inclinées et de préférence selon un angle inférieur à 45 degrés, par rapport à l'horizontal. Dans le mode de réalisation représenté, la paroi inférieure 30 du couvercle 4 comporte deux séries de louvres 35 remontant le long de la paroi latérale 22, qui forment donc les deux orifices de sortie 34.

En effet, le couvercle 4 comporte un relief en creux 36 qui forme un évidement pour recevoir l'extrémité supérieure 15a du tube de vapeur et son capuchon 16. Ainsi, l'entrée du tube de vapeur 15 est située dans l'enceinte 10 à une position particulièrement haute, et le relief 36 constitue un organe de détrompage puisque le couvercle 4 ne peut être engagé sur le pourtour intérieur 2c du boîtier 2 que lorsqu'il est correctement orienté angulairement par rapport à l'axe central Z.

Comme on peut le voir aux figures 2 et 3, la base 28b du dôme 28 est prolongée par des bras radiaux 41 (figure 3) ménageant entre eux des ouvertures 42 et reliés les uns aux autres par une couronne formant entretoise 43 qui vient en contact avec la face intérieure du pourtour périphérique 27.

Un élément filtrant 45 est disposé sur les bras radiaux 41 de manière à masquer les ouvertures 42. Les bras radiaux 41, la couronne 43 et le pourtour périphérique 27 définissent ainsi un espace de filtration 46 en communication directe avec la fente de remplissage 29. L'élément filtrant 45 est disposé également de manière horizontale pour faciliter le passage du liquide par gravité. Il peut prendre différentes formes selon le type de filtration souhaité.

Par exemple, dans le mode de réalisation représenté, l'élément filtrant 45 a essentiellement pour fonction de retenir des corps étrangers de petites dimensions qui auraient pu passer à travers la fente de remplissage 29. Il s'agit donc d'un simple maillage textile, par exemple en fil de nylon. Mais il pourrait s'agir d'un élément filtrant ayant une fonction de traitement du liquide versé, par exemple de purification ou d'adoucissement de l'eau.

En tout état de cause, la surface des ouvertures 42 de l'espace de filtration 46, et par conséquent la section de passage efficace de l'élément filtrant 45, est choisie de manière à être bien supérieure, par exemple au moins dix fois, à la section de la fente de remplissage 29, de manière à ce que le débit de liquide à travers cet élément 45 puisse être sensiblement égal au débit à travers la fente de remplissage 29. Cette section importante est aisément réalisable grâce à l'agencement de l'élément filtrant 45 dans l'espace interne 32 du couvercle. En effet, dans le mode de réalisation, la surface de l'élément filtrant 45 correspond sensiblement à celle d'un anneau plat dont le diamètre intérieur correspond au diamètre de la base 28b du dôme 28 et qui s'étend presque jusqu'au niveau du sommet circulaire 27a du rebord périphérique 27. L'élément filtrant 45 pourrait néanmoins s'étendre quasiment jusqu'à la paroi annulaire 22 du couvercle 4 et sous le dôme 28 si nécessaire.

Comme on peut le voir à la figure 3, le couvercle 4 est réalisé selon trois pièces, sans l'élément filtrant 45, à savoir : le pourtour périphérique 27, une pièce intermédiaire 47 et une cuvette 51. La pièce intermédiaire 47 forme de façon unitaire le dôme 28, les bras radiaux 41, la couronne 43 et des pieds 48 agencés sous cette couronne. La cuvette 51 forme de manière unitaire les parois latérale 22 et inférieure 30, ainsi que les louvres 35.

L'assemblage du couvercle 4 est réalisé en insérant la pièce intermédiaire 47 entre le pourtour périphérique 27 et la cuvette 51, ces deux dernières pièces pouvant être fixées ensemble par encliquetage ou tout autre moyen. Le positionnement de la pièce intermédiaire 47 par rapport à la cuvette 51 est assuré par des plots saillants 53 situés sur la surface intérieure de la cuvette 51, et dans lesquels viennent s'engager les pieds 48 de la pièce 47. La couronne 43 de la pièce intermédiaire 47 forme une entretoise entre la paroi inférieure 30 de la cuvette 51 et le pourtour périphérique 27, qui limite les possibilités de déformation de ce dernier et garantit donc la hauteur de la fente de remplissage 29.

On notera que la réalisation de la paroi supérieure 26 en deux pièces, à savoir le pourtour périphérique 27 et le dôme 28 de la pièce intermédiaire 47, permet de délimiter la fente de remplissage 29 sans avoir recours à un insert de moulage. En effet, s'il fallait avoir recours à un tel insert de moulage pour délimiter cette ouverture orientée radialement vers l'intérieur, cela augmenterait la complexité de l'opération de moulage et pourrait poser des problèmes de finition dans cette zone, notamment du fait de la présence de bavures qui gêneraient l'écoulement du liquide. De plus, cette réalisation en deux pièces (27,47) de la paroi supérieure 26 du couvercle 4 permet d'utiliser des plastiques différents, par exemple un plastique opaque teinté et un plastique translucide, notamment pour rendre plus intuitive la possibilité de remplissage de l'enceinte 10 à travers le couvercle 4.

Bien entendu, le mode de réalisation décrit n'est nullement limitatif. Par exemple, il serait possible de réaliser un couvercle 4 sans espace intérieur 32, uniquement à l'aide de la paroi supérieure 26 qui permet de canaliser un débit important de liquide vers une ouverture de remplissage 19 relativement étroite. D'autre part, l'espace intérieur 32 du couvercle pourrait présenter une structure sensiblement différente pour comporter, par exemple, un élément filtrant plus grand, mais aussi un système de chicanes ou louvres supplémentaires pour éviter des remontées de vapeur, ou encore un dispositif d'obturation du bec verseur 9.

## Revendications

1. Appareil électrique de chauffage de liquide comprenant un boîtier (2) définissant une enceinte (10) destinée à contenir un liquide et munie d'une ouverture supérieure (13), et un couvercle (4) fermant ladite ouverture supérieure (13) de l'enceinte et comprenant une paroi supérieure (26) munie d'au moins une ouverture de remplissage (29) communiquant avec l'enceinte, **caractérisé en ce que** la paroi supérieure (26) du couvercle (4) présente au moins un dôme (28) s'étendant depuis un sommet (28a) vers une base annulaire (28b), et un pourtour périphérique (27) surélevé par rapport à la base (28b) du dôme (28), ladite au moins une ouverture de remplissage (29) étant agencée entre la base (28b) du dôme et le pourtour périphérique (27).

2. Appareil selon la revendication 1, dans lequel l'ouverture de remplissage (29) est une fente annulaire continue entourant la base (28b) du dôme (28).

3. Appareil selon la revendication 1 ou 2, dans lequel l'ouverture de remplissage (29) est délimitée au moins en partie par un bord inférieur (28b) formé par la base du dôme (28), et par un bord supérieur (27c) formé par le pourtour périphérique (27) et situé à une hauteur supérieure par rapport audit bord inférieur (28b).

4. Appareil selon l'une quelconque des revendications précédentes, dans lequel le sommet (28a) du dôme (28) est centré par rapport à la paroi supérieure (26) du couvercle (4) et présente une symétrie de révolution autour d'un axe central vertical (Z), ledit sommet (28a) présentant de préférence une forme hémisphérique.

5. Appareil selon l'une quelconque des revendications précédentes, dans lequel la base (28b) du dôme (28) s'étend radialement vers l'extérieur dans une direction sensiblement horizontale.

6. Appareil selon l'une quelconque des revendications précédentes, dans lequel le couvercle (4) comprend en outre une paroi inférieure (30) munie d'au moins un orifice de sortie (34), et délimitant avec la paroi supérieure (26) un espace interne (32) dans lequel le liquide provenant de l'ouverture de remplissage (29) peut s'écouler dans l'enceinte (10) à travers ledit orifice de sortie (34).

7. Appareil selon la revendication 6, dans lequel l'espace interne (32) du couvercle (4) comporte un élément filtrant (45) s'étendant horizontalement et en communication directe avec l'ouverture de remplissage (29), ledit élément filtrant (45) présentant une section de passage nettement supérieure à la section de ladite ouverture de remplissage (29).

8. Appareil selon l'une quelconque des revendications 6 ou 7, dans lequel le boîtier (2) comporte un bec verseur (9) en communication avec l'enceinte (10), et dans lequel l'orifice de sortie (34) du couvercle (4) est situé de manière sensiblement opposée au bec verseur (9).

9. Appareil selon l'une quelconque des revendications 6 à 8, dans lequel l'orifice de sortie (34) est formé par des louvres (35) faiblement inclinées par rapport à l'horizontal.

10. Appareil selon l'une quelconque des revendications 6 à 9, dans lequel la paroi supérieure (26) du couvercle (4) comprend au moins deux pièces, à savoir une première pièce (27) formant le pourtour périphérique, et une deuxième pièce (47) comprenant le dôme (28) pourvu de bras radiaux (41) reliés à une entretoise (43) montée en appui contre la face intérieure de la première pièce (27).

## Claims

1. Electrical liquid-heating appliance comprising a housing (2) defining an enclosure (10) intended to contain a liquid and provided with a top opening (13), and a lid (4) closing the said top opening (13) of the enclosure and comprising a top wall (26) provided with at least one filling opening (2 9) communicating with the enclosure, **characterised in that** the top wall (26) of the lid (4) has at least one dome (28) extending from a top (28a) towards an annular base (28b), and a peripheral circumference (27) raised with respect to the base (28b) of the dome (28), the said at least one filling opening (29) being arranged between the base (28b) of the dome and the peripheral circumference (27).

2. Appliance according to claim 1, in which the filling opening (29) is a continuous annular slot surrounding the base (28b) of the dome (28).

3. Appliance according to claim 1 or 2, in which the filling opening (29) is at least partially delimited by a bottom edge (28b) formed by the base of the dome (28), and by a top edge (27c) formed by the peripheral circumference (27) and situated at a greater height with respect to the said bottom edge (28b).

4. Appliance according to any one of the preceding claims, in which the top (28a) of the dome (28) is centred with respect to the top wall (26) of the lid (4) and has symmetry of revolution about a vertical central axis (Z), the said top (28a) preferably having a hemispherical shape.

5. Appliance according to any one of the preceding claims, in which the base (28b) of the dome (28) extends radially towards the outside in a substantially horizontal direction.

6. Appliance according to any one of the preceding claims, in which the lid (4) also comprises a bottom wall (30) provided with at least one outlet orifice (34), and delimiting with the top wall (26) an internal space (32) in which the liquid coming from the filling opening (29) can flow into the enclosure (10) through the said outlet orifice (34).

7. Appliance according to claim 6, in which the internal space (32) of the lid (4) comprises a filtering element (45) extending horizontally and in direct communication with the filling opening (29), the said filtering element (45) having a cross section of flow appreciably greater than the cross section of the said filling opening (29).

8. Appliance according to either one of claims 6 or 7, in which the housing (2) comprises a pouring spout (9) in communication with the enclosure (10), and in which the outlet orifice (34) of the lid (4) is situated substantially opposite the pouring spout (9).

9. Appliance according to any one of claims 6 to 8, in which the outlet orifice (34) is formed by louvres (35) slightly inclined with respect to the horizontal.

10. Appliance according to any one of claims 6 to 9, in which the top wall (26) of the lid (4) comprises at least two pieces, namely a first piece (27) forming the peripheral circumference, and a second piece (47) comprising the dome (28) provided with radial arms (41) connected to a strut (43) mounted in abutment against the internal face of the first piece (27).

## Patentansprüche

1. Elektrische Vorrichtung zum Erwärmen von Flüssigkeit mit einem Gehäuse (2), das einen Raum (10) definiert, der zum Aufnehmen einer Flüssigkeit bestimmt ist und eine obere Öffnung (13) aufweist, und mit einem Deckel (4), der die obere Öffnung (13) des Raumes schließt und eine obere Wand (26) aufweist, die wenigstens eine Füllöffnung (29) aufweist, die mit dem Raum in Verbindung steht, **dadurch gekennzeichnet, dass** die obere Wand (26) des Deckels (4) wenigstens einen Dom (28) aufweist, der sich von einem Scheitel (28a) in Richtung einer ringförmigen Basis (28b) erstreckt,-sowie einen im Verhältnis zur Basis (28b) des Doms (28) erhöhten Umfang (27), wobei die wenigstens eine Füllöffnung (29) zwischen der Basis (28b) des Doms und dem Außenumfang (27) angeordnet ist.

2. Vorrichtung nach Anspruch 1, wobei die Füllöffnung (29) ein ringförmiger kontinuierlicher Spalt ist, welcher die Basis (28b) des Doms (28) umgibt.

3. Vorrichtung nach Anspruch 1 oder 2, wobei die Füllöffnung (29) wenigstens teilweise durch einen unteren Rand (28b) begrenzt ist, der durch die Basis des Doms (28) gebildet wird, sowie durch einen oberen Rand (27c), der von dem Außenumfang (27) gebildet wird und höher als der untere Rand (28b) liegt.

4. Vorrichtung nach einem der vorangehenden Ansprüche, wobei der Scheitel (28a) des Doms (28) relativ zu der unteren Wand (26) des Deckels (4) zentriert ist und zu einer vertikalen zentralen Achse (Z) rotationssymmetrisch ist, wobei der Scheitel (28a) vorzugsweise die Form einer Halbkugel aufweist.

5. Vorrichtung nach einem der vorangehenden Ansprüche, wobei die Basis (28b) des Doms (28) sich radial nach außen in einer im Wesentlichen horizontalen Richtung erstreckt.

6. Vorrichtung nach einem der vorangehenden Ansprüche, wobei der Deckel (4) ferner eine untere Wand (30) aufweist, die mit wenigstens einer Ausgangsöffnung (34) versehen ist und mit der oberen Wand (26) einen inneren Raum (32) abgrenzt, in dem die von der Füllöffnung (29) kommende Flüssigkeit durch die Ausgangsöffnung (34) in den Raum (10) fließen kann.

7. Vorrichtung nach Anspruch 6, wobei der innere Raum (32) des Deckels (4) ein Filter-element (45) aufweist, das sich horizontal erstreckt und in direkter Verbindung mit der Füllöffnung (29) ist, wobei das Filterelement (45) einen Durchgangsabschnitt aufweist, der deutlich über dem Abschnitt der Füllöffnung (29) liegt.

8. Vorrichtung nach einem der Ansprüche 6 und 7, wobei das Gehäuse (2) einen Ausgussschnabel (9) in Verbindung mit dem Raum (10) aufweist und wobei die Ausgangsöffnung (34) des Deckels (4) dem Ausgussschnabel (9) im Wesentlichen gegenüberliegt.

9. Vorrichtung nach einem der Ansprüche 6 bis 8, wobei die Ausgangsöffnung (34) von Lamellen (35) gebildet wird, welche im Verhältnis zur Horizontalen leicht geneigt sind.

10. Vorrichtung nach einem der Ansprüche 6 bis 9, wobei die obere Wand (26) des Deckels (4) wenigstens zwei Teile aufweist, nämlich ein erstes Teil (27), das den Außenumfang bildet, sowie ein zweites Teil (47), das den Dom (28) umfasst, der mit radialen Armen (41) versehen ist, die mit einem Abstandshalter (43) verbunden sind, der in Anlage gegen die Innenfläche des ersten Teils (27) angebracht ist.
